# EUROPÄISCHE PATENTSCHRIFT

(11) **EP 1 282 859 B1**
(45) Veröffentlichungstag und Bekanntmachung des Hinweises auf die Patenterteilung: **15.10.2003**
(21) Anmeldenummer: 01943110.5
(22) Anmeldetag: 17.05.2001
(51) Int. Cl.: G06F 11/20, G06F 11/16, G05B 19/042

(54) **PERIPHERIEBAUSTEIN MIT HOHER FEHLERSICHERHEIT FÜR SPEICHERPROGRAMMIERBARE STEUERUNGEN**
PERIPHERAL COMPONENT WITH HIGH ERROR PROTECTION FOR MEMORY PROGRAMMABLE COMMAND APPARATUSES
COMPOSANT PERIPHERIQUE AYANT UN DEGRE DE PROTECTION ELEVE CONTRE LES ERREURS, DESTINE A DES DISPOSITFS DE COMMANDE A MEMOIRE PROGRAMMABLE

(30) Priorität: 18.05.2000 DE 10024479; 19.07.2000 DE 10035174
(43) Veröffentlichungstag der Anmeldung: 12.02.2003
(73) Patentinhaber: SIEMENS AKTIENGESELLSCHAFT, 80333 München (DE)
(72) Erfinder: VÄTH, Joachim, 90571 Schwaig (DE)
(86) Internationale Anmeldenummer: DE0101885
(87) Internationale Veröffentlichungsnummer: WO01088711

(56) Entgegenhaltungen:
- US-A- 4 412 280
- US-A- 5 088 021
- US-A- 5 508 910

## Beschreibung

Die Erfindung richtet sich auf einen Peripheriebaustein gemäß Anspruch 1 mit hoher Fehlersicherheit für speicherprogrammierbare Steuerungen, insbesondere eine Analogeingabe-Schaltung, sowie auf einen Verfahren gemäß Anspruch 18.

Aus der US 5,508,910 ist ein redundantes analoges Ein-/Ausgabe-System mit zwei identischen analogen Ein-/Ausgabeeinheiten bekannt, wobei jeweils in Ein-/Ausgabeeinheit im Arbeitsbetrieb und die jeweils andere im Monitorbetrieb ist. Jede analoge Ein-/Ausgabeeinheit weist einen Mikrocomputer, zwei D/A-Konverter und einen D/A-Konverter auf. In einem Fehlerfall schaltet der jeweilige Mikrocomputer einer analogen Ein-/Ausgabeeinheit sich selbst in den Monitorbetrieb und die jeweilige andere Ein-/Ausgabeeinheit in den Arbeitsbetrieb.

Wenn in ständig steigendem Umfang industrielle und sonstige, technisch komplizierte Anlage durch Einsatz speicherprogrammierbarer Steuerungen automatisiert werden, so stand hierbei ursprünglich wohl der Gedanke der Übertragung einfacher Tätigkeiten Pate wie bspw. die Aktivierung verschiedener Bearbeitungsschritte eines seriellen Bearbeitungsprozesses, sowie einfache Regelungen, z. B. Füllstandsregelungen oder Temperaturregelungen. Durch den Aufbau von Regelkreisen war eine Rückkoppelung von Prozesssignalen erfolgt, und diese Tendenz führte schließlich zur Übertragung weitreichender Überwachungsaufgaben auf speicherprogrammierbare Steuerungen. Hierbei stellt sich jedoch heraus, dass bei der Delegierung derartiger Aufgaben von einer Überwachungsperson auf einen Automaten eine für überwachungsaufgaben wichtige, menschliche Eigenschaft von größter Bedeutung ist, nämlich die Verantwortung, bei dem Betrieb einer Anlage das Auftreten von Unfällen und sonstigen Schäden möglichst zu vermeiden sowie eine höchstmögliche Sicherheit für Menschen, Maschinen und Umwelt zu gewährleisten. Die regelmäßig wiederkehrenden Berichte über das Entweichen von Giftgasen aus Anlagen der chemischen Industrie sowie die unzähligen Gefahren, welche als Folge des Einsatzes großer Energiemengen in den vielfältigsten Anlagen der Rohstoffindustrie, Energieerzeugung, F6rdertechnik, Umformtechnik und der automatisierten Fertigung lauern, müssen hierbei als Ansporn dafür gesehen werden, die Anlagensicherheit weiter zu erhöhen.

Hierbei kann eine Fehlfunktion einzelner Anlagenteile wohl niemals ausgeschlossen werden, und es muss deshalb die Aufgabe einer automatischen Steuerung sein, derartige Fehlfunktionen zu erkennen und schnellstmöglich Gegenmaßnahmen einzuleiten bzw. die Anlage stillzusetzen oder einen Alarm auszulösen. Diese Aufgabe kann sie jedoch nur erfüllen, wenn sichergestellt ist, dass sie auch und gerade beim Auftreten von Fehlfunktionen in der Anlage selbst einwandfrei funktioniert. Obwohl der millionenfache Einsatz von Mikroelektronik in Armbanduhren, Haushaltsgeräten, Flug- und Fahrzeugen erkennen lässt, dass die größte Gefahr beim Betrieb eines elektronischen Schaltkreises wohl der Ausfall der Versorgungsspannung ist, insbesondere das Nachlassen einer Batteriespannung, so darf doch nicht außer acht gelassen werden, dass in industriellen Anlagen ein rauer Betrieb herrscht und nur selten eine von Dämpfen, Gasen und sonstigen Chemikalien völlig reine Atmosphäre vorausgesetzt werden kann. Daher sollten gerade bei kritischen Prozessen, bei welchen eine Fehlfunktion möglichst nicht auftreten sollte, zusätzliche Maßnahmen getroffen werden, um die Funktionssicherheit der Steuereinrichtung weiter zu erhöhen.

Bei der Behandlung dieses Problems sollte man sich den Aufbau einer speicherprogrammierbaren Steuerung vergegenwärtigen: Um eine optimale Anpassung an die unterschiedlichsten Anwendungsfälle zu ermöglichen, hat sich hierbei in der Praxis ein modularer Aufbau durchgesetzt, wobei der Kern der speicherprogrammierbaren Steuerung durch eine Zentraleinheit gebildet wird, in der ein für den betreffenden Anwendungsfall spezifisches Programm abgearbeitet wird. Die Schnittstellen zu den einzelnen Aktuatoren des betreffenden Prozesses wie auch ausgegliederte Unterfunktionen wie bspw. Regelungen sind dagegen in davon getrennten Modulen enthalten, welche üblicherweise allesamt an eine Kommunikationsleitung bspw. in Form eines seriellen Busses angekoppelt sind, damit ein Informationsaustausch zwischen den verschiedenen Komponenten möglich ist. Solchenfalls kann ein Fehler theoretisch in allen Komponenten auftreten, d. h. sowohl in der Zentraleinheit wie auch in den angeschlossenen Komponenten, und auch auf der diese miteinander verbindenden Kommunikationsleitung.

Während die ersten beiden Fehlerquellen bei kritischen Prozessen durch eine Erhöhung der Verfügbarkeit bspw. durch Einsatz einer zweiten, parallel geschalteten Zentraleinheit und/oder eines zweiten, parallel betriebenen Kommunikationsbusses, ausgeschaltet oder auf ein äußerst minimales Restrisiko reduziert werden können, so wäre eine Verdoppelung aller sonstigen Komponenten in den meisten Anwendungsfällen mit einem erheblichen Zusatzaufwand verbunden und würde darüber hinaus aufgrund der enormen Vergrößerung der Komplexität eher sogar die Gefahr von zusätzlichen Fehlerquellen infolge von Verdrahtungs- oder Einstellungsfehlern mit sich bringen. Außerdem würde solchenfalls der Informationsaustausch über die betreffende Kommunikationsleitung mindestens verdoppelt, was eine weitere Leistungssteigerung der Steuerung erforderlich machte. Dabei ist zu bedenken, dass andererseits gerade den Peripheriebausteinen als Schnittstelle zwischen dem Prozess und der Steuerung eine erhöhte Bedeutung beizumessen ist, da beim Ausfall einer derartigen Komponente möglicherweise entscheidungswichtige Signale verloren gehen oder die Einflussnahme der Steuerung auf den Prozess eingeschränkt oder gar unterbrochen wird.

Aus den Nachteilen des beschriebenen Stands der Technik resultiert das die Erfindung initiierende Problem, einen Peripheriebaustein für speicherprogrammierbaren Steuerungen zu schaffen, der bereits für sich genommen eine erhöhte Fehlersicherheit aufweist, so dass eine hohe Fehleraufdeckung auch ohne die Verwendung einer redundanten Komponente erreicht werden kann.

Die Lösung dieses Problems gelingt mittels wenigstens zweier weitgehend identisch aufgebauter Kanäle zur parallelen Signalein- und/oder -ausgabe, die im Bereich der Peripherieschnittstelle parallelgeschalten und/oder parallelschaltbar sind, und durch wenigstens eine Datenverarbeitungs-Baugruppe (µP oder µC) zum Testen der Kanäle ohne Unterbrechung des Datenflusses.

Der von der Erfindung beschrittene Weg zeichnet sich durch eine Mehrzahl von Maßnahmen aus: Einerseits wird bereits innerhalb des erfindungsgemäßen Peripheriebausteins ein zweiter Kanal vorgesehen, so dass bereits intern eine Redundanz geschaffen wird. Darüber hinaus ist eine Datenverarbeitungs-Baugruppe vorgesehen, welche parallel zu dem üblichen Datenfluss permanent oder zumindest in kurzen Zeitabständen einen Test eines oder beider Kanäle durchführt, wodurch sowohl die Kommunikationsleitung zu der Zentraleinheit wie auch letztere von dieser Aufgabe entlastet wird. Sobald andererseits eine Fehlfunktion eines oder beider Kanäle erkannt worden ist, so kann die den Test durchführende Datenverarbeitungs-Baugruppe dies unverzüglich der Zentraleinheit melden, damit solchenfalls unverzüglich eine Gegenmaßnahme eingeleitet werden kann, bevor in der Anlage selbst eine Fehlfunktion auftreten kann. Dadurch ist sichergestellt, dass bei Eintritt eines Fehlerfalls in der Anlage stets zumindest ein Kanal der erfindungsgemäßen Peripheriebaugruppe intakt ist, so dass ein Informationsaustausch zwischen Anlage und Steuerung gewährleistet ist.

Die Erfindung zeichnet sich weiterhin aus durch eine zweite Datenverarbeitungs-Baugruppe µP oder µC) zum Aufbereiten der zu übertragenden Daten während einer Testphase. Einerseits wird durch diese zweite Datenverarbeitungs-Baugruppe bei Ausfall der ersten Datenverarbeitungs-Baugruppe eine Redundanz geschaffen, andererseits kann solchenfalls eine Datenaufbereitung auch in dem den Datenfluss übernehmenden Kanal vorgenommen werden, wobei bspw. bei Ausfall eines zu erwartenden Eingangssignals eine Fehlermeldung ausgelöst werden kann, außerdem kann das Datenformat in eine für die Kommunikation mit der Zentralbaugruppe oder für die Kommunikation mit der den Test durchführenden Datenverarbeitungs-Baugruppe umgesetzt werden.

Es hat sich als günstig erwiesen, dass jede der beiden Datenverarbeitungs-Baugruppen je einem Kanal zugeordnet ist und derart ausgebildet ist, dass sie sowohl die Signalaufbereitung wie auch den Test dieses Kanals übernehmen kann. Die feste Zuordnung der beiden Datenverarbeitungs-Baugruppen zu je einem Kanal bringt eine schaltungsmäßige Vereinfachung mit sich, indem zwischen der betreffenden Kanalbaugruppe und der zugeordneten Datenverarbeitungs-Baugruppe kein weiteres Schaltelement vorgesehen werden muss, welches somit als Fehlerquelle ausscheidet.

Es liegt im Rahmen der Erfindung, dass die beiden Datenverarbeitungs-Baugruppen zwecks Informationsaustausch miteinander gekoppelt sind. Diese Koppelung ist einerseits für eine Koordination des Betriebs der beiden Kanalbaugruppen wichtig, damit stets mindestens auf einem Kanal ein ordnungsgemäßer Datenfluss erfolgt, andererseits können bspw. Testergebnisse ausgetauscht werden, so dass jede der beiden Datenverarbeitungs-Baugruppen immer über den Zustand beider Kanäle informiert ist und nicht nur ihren eigenen Betrieb danach ausrichten kann, sondern auf Anfrage einer Zentraleinheit auch sofort die gewünschten Auskünfte erteilen kann.

Die Erfindung lässt sich dahingehend weiterbilden, dass die beiden Datenverarbeitungs-Baugruppen über bausteininterne Verbindungen miteinander gekoppelt sind. Diese Maßnahme reduziert den Signalverkehr auf der Verbindungsleitung zwischen den einzelnen Komponenten der speicherprogrammierbaren Steuerung.

Weitere Vorteile lassen sich dadurch erzielen, dass die beiden Datenverarbeitungs-Baugruppen über einen Speicher gekoppelt sind, auf den sie beide Zugriff haben. In diesem gemeinsamen Speicher können die Datenverarbeitungs-Baugruppen die für die jeweils andere Baugruppe bestimmten Informationen hinterlegen, von wo sie sodann zu gegebenem Zeitpunkt, d. h. bei Bedarf, abgeholt werden können. Hierdurch werden unnötige Wartezeiten einer Datenverarbeitungs-Baugruppe vermieden.

In Ausgestaltung des Erfindungsgedankens kann vorgesehen sein, dass die beiden Datenverarbeitungs-Baugruppen an unterschiedlichen Ein-/Ausgängen des Speichers angeschlossen sind (Dual-Port-RAM). Solchenfalls ist die Kommunikation jeder der beiden Datenverarbeitungs-Baugruppen mit dem gemeinsamen Speicher völlig unabhängig von dem Betrieb der jeweils anderen Baugruppe und insbesondere von deren Taktung. Somit lassen sich für jeden der beiden Datenverarbeitungs-Baugruppen weitgehend autarke Systeme schaffen, wodurch der reibungslose Betrieb zumindest eines Signals auch dann gewährleistet werden kann, wenn in der anderen Kanalbaugruppe und/oder der diese bedienenden Datenverarbeitungs-Baugruppe ein Fehler eingetreten ist.

Die Leistungsfähigkeit der erfindungsgemäßen Anordnung lässt sich erhöhen, indem bei einem Zweikanal-Eingabe-Baustein ein zusätzlicher Ausgabekanal, bei einem Zweikanal-Ausgabe-Baustein ein zusätzlicher Einlesekanal vorgesehen ist, der mit jedem der beiden übrigen Kanäle koppelbar ist, um eine Schleife über jeweils einen der beiden parallelen Kanäle zu bilden, so dass die ordnungsgemäße Verarbeitung eines Testsignals überprüfbar ist. Während ohne eine derartige Anordnung allenfalls ein Test durch Vergleich der von beiden Kanalbaugruppen ausgegebenen Signale möglich ist, so kann durch einen hierzu komplementären Testkanal eine Schleife über jeweils eine der beiden Kanalbaugruppen geschlossen werden, und somit ist ein echter Test auf die absolute Genauigkeit der gesamten Komponenten dieser Schleife durch Vergleich des Eingangssignals dieser Schleife mit deren Ausgangssignal möglich. Sobald demnach ein Fehler auftritt, bei welchem eine Kanalbaugruppe nicht mehr ordnungsgemäß funktioniert, so kann mit einem derartigen Testaufbau eindeutig festgestellt werden, welche von beiden Kanalbaugruppen den Defekt aufweist, und sodann kann der Datenfluss über die noch intakte Kanalbaugruppe geleitet werden, bis die fehlerhafte Kanalbaugruppe ausgetauscht oder repariert worden ist. Mit der erfindungsgemäßen Anordnung wird daher nicht nur ein Fehler sensiert, sondern dieser kann auch eindeutig lokalisiert werden, und solange noch eine einzige Kanalbaugruppe funktioniert, so kann der erfindungsgemäße Peripheriebaustein seine Aufgabe erfüllen.

Zur Vereinfachung des konstruktiven Aufwandes kann die Ansteuerung des Testkanals einer der beiden Datenverarbeitungs-Baugruppen übertragen sein. Zwar wäre es zur weiteren Erhöhung der Redundanz denkbar, die Steuerung der Testkanalbaugruppe beiden Datenverarbeitungs-Baugruppen zu erschließen. Dies erweist sich jedoch nicht als notwendig, da beim Ausfall einer Kanalbaugruppe ohnehin kein Test mehr durchgeführt werden kann, weil solchenfalls der normale Datenfluss unterbrochen werden müsste. Aus diesem Grund kann die Ansteuerung der Testkanalbaugruppe fest einer von beiden Datenverarbeitungs-Baugruppen zugewiesen sein, so dass ein zusätzlicher Schalter sowie auch zwischengeschaltete ODER-Gatter od. dg1. entbehrlich sind und die Ausfallwahrscheinlichkeit weiter reduziert wird.

Überflüssige Fehlerquellen lassen sich vermeiden, indem die beiden Kanäle auf der selben Platine angeordnet sind. Diese Konstruktionsvorschrift folgt der Erkenntnis, dass jeder Steckverbinder, und insbesondere auch jede Kabelverbindung eine höhere Ausfallwahrscheinlichkeit hat als eine Leiterbahn auf einer Platine, wo allenfalls eine schlechte Lötverbindung zu einem Defekt führen könnte.

Dem selben Zweck dient eine Weiterbildung dahingehend, dass wenigstens ein Datenverarbeitungs-Baustein zusammen mit den beiden Kanälen auf der selben Platine angeordnet ist. Auch diese Maßnahme reduziert die Anzahl der Steck- und Lötverbindungen und erhöht somit die Betriebssicherheit des erfindungsgemäßen Peripheriebausteins.

Damit eingestreute Störspannungen von der Auswerteelektronik ferngehalten werden, sind in beiden Kanälen, vorzugsweise auch in einem Testkanal, Potentialtrennungen vorgesehen. Diesen Potentialtrennungen obliegt es, den reinen Informationswert eines Signals von dessen tatsächlichen Spannungspotential vollständig abzutrennen, so dass gefährliche Störspannungen, welche von dem Prozess herrühren oder auf den betreffenden Zuleitungen eingestreut werden können, der empfindlichen Mikroelektronik nichts anhaben können. Dies kann am effektivsten durch Opto-Koppler realisiert werden, welche die Potentialfreiheit bei der Lichtübertragung nutzt.

Der konstruktive Aufwand lässt sich weiter reduzieren, wenn eine Signalumsetzung zwischen analogen Strom- oder Spannungspegeln einerseits und einem alternierenden Signal (Impulsfolge) mit einer zu dem Analogsignal proportionalen Frequenz andererseits erfolgt. Während die Datenverarbeitungs-Baugruppen schließlich eine Reihenfolge binärer Zahlendarstellungen der betreffenden Amplitude des Analogsignals verwenden, bietet die Zwischenschaltung eines alternierenden Signals mit veränderbarer Frequenz den Vorteil, dass die vollständige Information über den Amplitudenwert auf einer einzigen Signalleitung übertragen werden kann, wobei andererseits eine wenig störanfällige Analogschaltung Verwendung finden kann.

Solchenfalls ist es möglich, die Potentialtrennung bei dem alternierenden Signal vorzunehmen, bspw. über Optokoppler. Da in diesem alternierenden Signal der volle Informationsgehalt über die zu übertragende Signalamplitude enthalten ist, bietet es sich für die Potentialtrennung bevorzugt an. Einerseits wird dadurch ein erhöhter Aufwand für die Potentialtrennung eingespart, wie dies bspw. bei einem binären Signal der Fall wäre, andererseits kann die Potentialtrennung bei einem zwischen zwei Spannungsbereichen alternierenden Signal, dessen exakte Amplitude keine Information trägt, weitaus einfacher gestaltet werden als bei einem reinen Analogsignal, wo die Information der betreffenden Spannungsamplitude entspricht.

Zur Entschlüsselung des alternierenden Signals kann dieses einem Zählerbaustein zugeführt sein, der durch Zählen der Impulse innerhalb eines festen Zeitintervalls einen zu der Frequenz des alternierenden Signals proportionalen Digitalwert erzeugt. Hierbei handelt es sich um einen höchst einfachen Aufbau, wobei ausschließlich nach Ablauf eines fest vorgegebenen Zeitintervalls der Zählerstand abgefragt und sodann der Zähler wieder auf null zurückgesetzt werden muss. Die Auflösung, welche mit dieser Signalumsetzung erreicht werden kann, hängt ab von dem Zählintervall einerseits und der Frequenz des alternierenden Signals andererseits. Um im Rahmen dieses Verfahrens auch Spannungen der Amplitude null oder gar negative Spannungen mit einer ausreichenden Auflösung übertragen zu können, sollte das relevante Spannungsintervall auf einen Frequenzbereich transformiert werden, der sich von einer der minimalen Spannungsamplitude entsprechenden Mindestfrequenz nach oben erstreckt.

Bei umgekehrter Signalrichtung sollte das alternierende Signal einem Baustein mit einem sequentiellen Ausgang entnommen werden, bspw. einem Schieberegister, welches in einem vorgegebenen Zeitintervall eine vorgebbare Anzahl von Ausgangsbits abgibt. Die Möglichkeiten zur Erzeugung des alternierenden Signals sind vielfältig. Da die Aufteilung der einzelnen Impulse auf das betreffende Zeitintervall nicht gleichförmig erfolgen muss, könnten bspw. von der Taktfrequenz abgeleitete Impulse ausgegeben werden, wobei gleichzeitig eine Zählung erfolgen könnte, um das aktuelle Zählergebnis mittels eines Komparators mit dem vorgegebenen Wert zu vergleichen und nach Erreichen desselben die Übertragung weiterer Impulse zu unterdrücken. Eine andere Möglichkeit besteht darin, die betreffende Anzahl von Impulsen in ein Schieberegister zu schreiben und dessen Inhalt sodann innerhalb des vorgegebenen Zeitintervalls seriell an die betreffende Kanalbaugruppe auszugeben.

Zum Betrieb einer erfindungsgemäßen Anordnung sieht die Erfindung vor, dass stets ein Kanal zur Signalübertragung verwendet wird, während der andere zu Test- und/oder Korrekturzwecken betrieben wird. Solchenfalls kann der Test für die Zentraleinheit der betreffenden, speicherprogrammierbaren Steuerung völlig unsichtbar erfolgen, d. h., diese wird stets und weitgehend verzögerungsfrei mit den für sie notwendigen Informationen beliefert bzw. darf darauf vertrauen, dass von ihr in Richtung der Anlage abgegebene Signale dort auch nahezu unverzögert eintreffen, sofern kein Totalausfall der betreffenden Peripheriebaugruppe erfolgt.

Ein Komponententest kann dadurch vorgenommen werden, dass die Ausgangssignale der beiden Kanäle voneinander subtrahiert werden, wobei das Subtraktionsergebnis mit wenigstens einem vorgegebenen Grenzwert verglichen wird, um bei einer größeren Abweichung einen Fehler zu erkennen. Dieser Modus kann verwendet werden, um einen auftretenden Fehler einer Kanalbaugruppe sofort zu erkennen, da solchenfalls eine von null erheblich abweichende Differenz auftritt. Dabei kann dieser Vergleich sowohl bei einer Eingangs- wie auch bei einer Ausgangsbaugruppe vorgenommen werden, wenn bei dem Ausgang bspw. eine entsprechende Analogschaltung vorgesehen ist mit einem als Subtrahierer verschalteten Operationsverstärker, ggf. einem Absolutwertbildner und einem Komparator zum Vergleich der absoluten Differenz mit einem vorgegebenen und noch tolerierbaren Grenzwert. Die Rückmeldung dieser Testbaugruppe kann mittels eines einzigen Signals, bspw. des Ausgangssignals des Komparators erfolgen, so dass sich auch hier eine Potentiaitrennung mit einfachsten Mitteln erreichen lässt.

Im Rahmen eines anderen Testmodus wird ein Kanal zur Signalübertragung verwendet und der andere währenddessen einem Test unterzogen, indem ein Testsignal ausgegeben und wieder eingelesen wird, wobei der ausgegebene und der eingelesene Signalwert voneinander subtrahiert werden, und wobei schließlich das Subtraktionsergebnis mit wenigstens einem vorgegebenen Grenzwert verglichen wird, um bei einer größeren Abweichung einen Fehler zu erkennen. Während durch den Parallelbetrieb beider Kanäle und Vergleich von deren Ausgangssignalen festgestellt werden kann, ob bei einem dieser beiden Kanäle überhaupt ein Fehler aufgetreten ist, kann mit dem letzteren Testschritt sogar ermittelt werden, welcher von beiden Kanälen defekt ist. Dies wird erreicht, indem der zu untersuchende Kanal als Bestandteil einer Signalübertragungsschleife geschalten wird, und durch Vergleich des Ausgangssignals dieser Schleife mit ihrem Eingangssignal lässt sich bei einer erkennbaren Abweichung eine Fehlfunktion der betreffenden Kanalbaugruppe diagnostizieren. Solchenfalls kann selektiv dieser abgeschalten und sodann vorübergehend nur mit dem verbleibenden Kanal gearbeitet werden, bis infolge eines durch die Fehlermeldung ausgelösten Alarms der Defekt behoben worden ist.

Um einen eingetretenen Fehler frühzeitig erkennen zu können, sollte der Testmodus in kurzen Zeitabständen wiederholt werden, wobei jeweils zunächst ein Kanal und sodann der andere getestet wird und der jeweils andere währenddem die Signalübertragung übernimmt. In dem äußerst unwahrscheinlichen Fall, dass gleichzeitig beide Kanalbaugruppen beschädigt werden, ließe sich durch einen Vergleich der Ausgangssignale möglicherweise kein Fehler feststellen, wenn bspw. beide Ausgangssignale gleichzeitig spannungslos werden. Dieser Fall kann jedoch durch regelmäßig durchzuführende Tests der absoluten Funktionsfähigkeit der Kanalbaugruppen ausgeschlossen bzw. erkannt werden. Deshalb sollte in kurzen Zeitabständen zumindest eine der beiden Kanalbaugruppen auf ihre absolute Funktionsfähigkeit hin untersucht werden. Da der gleichzeitige Ausfall beider Kanalbaugruppen ein extrem seltenes Ereignis bildet, können diese absoluten Funktionstests in längeren Zeitintervallen durchgeführt werden, bspw. etwa einmal pro Sekunde. Sofern während des Normalbetriebs kein Vergleich der parallelgeschalteten Kanalbaugruppen vorgenommen wird, sollte in entsprechend kurzen Zeitabständen der Datenfluss zwischen den beiden Kanalbaugruppen umgeschalten und währenddessen jeweils wenigstens ein Test der solange nicht benötigten Kanalbaugruppe durchgeführt werden.

Optimale Ergebnisse lassen sich erzielen, wenn ein Datenverarbeitungs-Baustein die Auswertung der Testergebnisse (Vergleich der Ausgangssignale beider Kanäle bzw. des eingelesenen mit dem ausgegebenen Testergebnis) übernimmt. Während des ordnungsgemäßen Betriebes kann der Vergleich der Ausgangssignale beider, parallel betriebener Kanalbaugruppen stets in demselben Datenverarbeitungs-Baustein durchgeführt werden; diesem kann für die abwechselnd durchzuführenden Absolutwert-Tests auch die Steuerung der Testkanalbaugruppe sowie der Vergleich zwischen dem Eingangs- und dem Ausgangssignal der jeweiligen Testschleife übertragen werden. Hierdurch reduziert sich der Programmieraufwand, da sich eine eindeutige Master-Slave-Konfiguration ergibt, wo Steuerungsbefehle stets von dem Master-Baustein zu dem Slave-Baustein und Informationen stets in umgekehrter Richtung gesendet werden.

Ein ordnungsgemäßer Datenaustausch mit der Zentraleinheit der speicherprogrammierbaren Steuerung erfolgt dadurch, dass ein Datenverarbeitungs-Baustein, vorzugsweise der die Auswertung übernehmende, über eine Datenschnittstelle mit der zentralen Steuereinheit kommuniziert. Der erfindungsgemäße Peripheriebaustein kann in verschiedener Hinsicht zur Erhöhung der Fehlersicherheit einer speicherprogrammierbaren Steuerung verwendet werden. Bereits in einer Anlage mit nur einer Zentraleinheit und einem Kommunikationsbus wird die Sicherheit gegen einen Ausfall der Peripheriebaugruppe selbst erhöht. Durch Verwendung besonders sicherer Datenleitungen und/oder durch Einsatz besonders sicherer Datenformate und/oder durch eine Senkung der Datenübertragungsrate kann ebenfalls eine Erhöhung der Sicherheit erzielt werden. Diese Kommunikation findet standardmäßig mit einem der beiden Datenverarbeitungs-Baugruppen in der erfindungsgemäßen Peripheriebaugruppe statt. Über diese Baugruppe kann die Zentraleinheit auch den aktuellen Fehlerstatus beider Kanalbaugruppen erfragen. Deshalb ist es von Vorteil, hierfür diejenige Baugruppe zu verwenden, welche gleichzeitig auch den Testablauf steuert, da solchenfalls eine Datenübertragung von den Master-Baustein zu dem Slave-Baustein nicht erforderlich ist.

Um die Ereignisse in dem erfindungsgemäßen Peripheriebaustein für die Zentraleinheit der betreffenden speicherprogrammierbaren Steuerung transparent zu machen, sollte von dem mit der Zentraleinheit der speicherprogrammierbaren Steuerung kommunizierenden Datenverarbeitungs-Baustein ein Informationssignal über den aktuellen Test- bzw. Fehlerstatus bereitgehalten werden. Damit die Zentraleinheit zu jedem Zeitpunkt eine Information über den jüngsten Erkenntnisstand hinsichtlich der Funktionsfähigkeit der erfindungsgemäßen Kanalbaugruppen erhalten kann, sollte das jeweils aktuellste Testergebnis abgespeichert werden, um bei jeder Anfrage seitens der Zentraleinheit der speicherprogrammierbaren Steuerung eine sofortige Antwort liefern zu können. Die Speicherung kann hierbei entweder in einem Register des die Tests ausführenden Datenverarbeitungs-Bausteins vorgenommen werden, oder aber in einem externen Speicher.

Schließlich entspricht es der Lehre der Erfindung, dass jeder Datenverarbeitungs-Baustein je eine eigene Datenschnittstelle zu je einer Datenverbindung aufweist, so dass die Verwendung zweier voneinander völlig unabhängiger Datenleitungen möglich ist. Diese Konfiguration ist vor allem für die Verwendung bei speicherprogrammierbaren Steuerungen mit zwei voneinander unabhängig betriebenen Kommunikationsbussen gedacht, welche jeweils mit einem von zwei, parallel betriebenen Zentraleinheiten kommunizieren. Solchenfalls ergibt sich ein maximaler Grad an Redundanz, während andererseits die Systemstruktur äußerst übersichtlich ist, da jede der beiden Zentraleinheiten nur mit jeweils einer Datenverarbeitungs-Baugruppe der erfindungsgemäßen Peripheriebaugruppe kommuniziert. Da andererseits die beiden Datenverarbeitungs-Baugruppen des erfindungsgemäßen Peripheriebausteins miteinander in Verbindung stehen, kann nötigenfalls auch ein "Über-Kreuz-Betrieb" aufrecht erhalten werden, wobei bspw. bei Ausfall der primären Kanalbaugruppe die Hauptzentraleinheit über die Master-Datenverarbeitungs-Baugruppe die Slave-Datenverarbeitungs-Baugruppe steuert und damit auf die sekundäre Kanalbaugruppe zugreift, oder bei Ausfall der Hauptzentraleinheit die Hilfszentraleinheit über die Slave-Datenverarbeitungs-Baugruppe entsprechende Anweisungen an die Master-Datenverarbeitungs-Baugruppe erteilt und dadurch mit der primären Kanalbaugruppe arbeiten kann.

Weitere Merkmale, Einzelheiten, Vorteile und Wirkungen auf der Basis der Erfindung ergeben sich aus der nachfolgenden Beschreibung eines bevorzugten Ausführungsbeispiels der Erfindung sowie anhand der Zeichnung. Hierbei zeigt:
Fig. 1 ein Blockschaltbild einer speicherprogrammierbaren Steuerung mit hoher Fehlersicherheit;
Fig. 2 ein Blockschaltbild einer speicherprogrammierbaren Steuerung mit hoher Verfügbarkeit und hoher Fehlersicherheit;
Fig. 3 den grundsätzlichen Aufbau eines erfindungsgemäßen Peripheriebausteins; sowie
Fig. 4 einen Schaltplan eines erfindungsgemäßen Peripheriebausteins für analoge Eingabe.

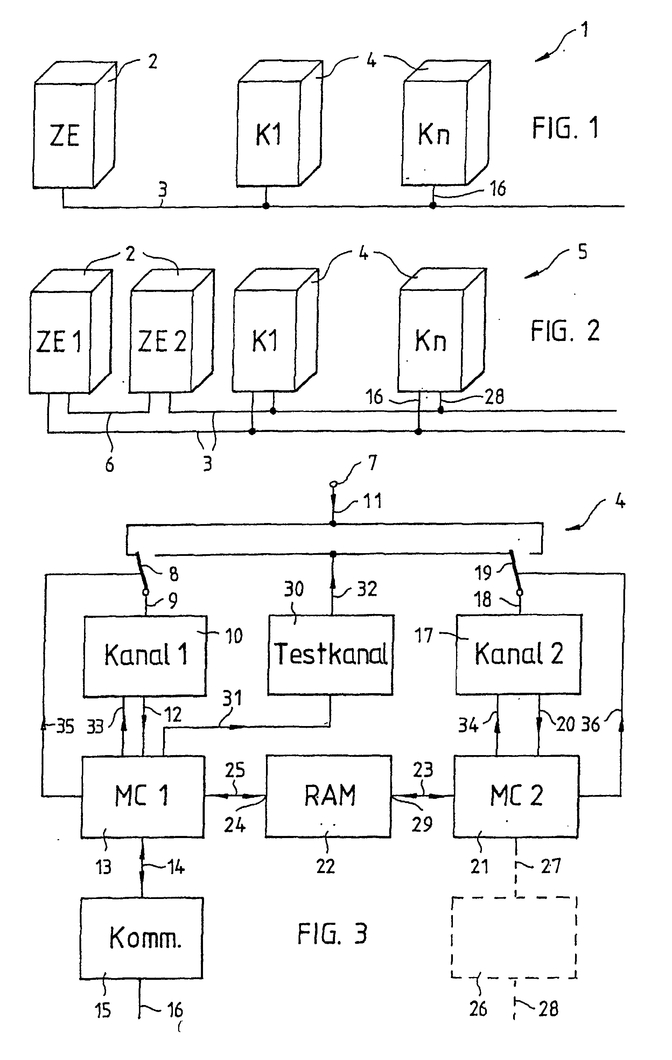

Die in Fig. 1 wiedergegebene speicherprogrammierbare Steuerung 1 umfasst eine fehlersicher aufgebaute Zentraleinheit 2, an welche über einen fehlersicher betriebenen Kommunikationsbus 3 n Komponenten 4 angeschlossen sind, von denen wenigstens eine fehlersicher aufgebaut ist. Die fehlersicheren Komponenten 2 - 4 bilden eine lückenlose, sicherheitsrelevante Kette, wobei über die fehlersichere Komponente 4 Informationen erfasst, über den Kommunikationsbus 3 mit hoher Sicherheit an die Zentraleinheit 2 übertragen werden, dort verknüpft werden, um Steuerbefehle zu erhalten, mit denen über den Kommunikationsbus 3 und eine wiederum fehlersichere Peripheriekomponente 4 eine Reaktion eines Aktuators in der Anlage veranlasst wird. Die hohe Fehlersicherheit der einzelnen Komponenten 2, 4 kann durch einen sehr sorgfältigen Aufbau sowie durch ständige Selbsttests mittels eines jeweils in diesen Bauteilen 2, 4 enthaltenen Mikroprozessors oder Mikrocontrollers bewirkt werden. Besonders wichtige Bauteile der erfindungsgemäßen, fehlersicheren Peripheriebaugruppe 4 sind zusätzlich mehrfach ausgebildet, um dadurch eine Redundanz für die Situation eines Ausfalls zu schaffen.

Demgegenüber weist die speicherprogrammierbare Steuerung 5 eine besonders hohe Verfügbarkeit auf, indem zusätzlich zu einer ersten fehlersicheren Zentraleinheit ZE 1 eine dazu parallelbetriebene Zentraleinheit ZE 2 vorgesehen ist, welche mit sämtlichen n Komponenten 4 über jeweils eigene, fehlersichere Kommunikationsbusse 3 kommunizieren. Ferner kann ein Datenaustausch sowie eine Synchronisation der beiden Zentraleinheiten ZE 1, ZE 2 über eine Koppelung 6 erfolgen. Auch bei dieser Anordnung ist zumindest eine der an die Zentraleinheiten 2 angeschlossenen Komponenten 4 als erfindungsgemäße, fehlersichere Peripheriebaugruppe aufgebaut, damit die hohe Verfügbarkeit dieser speicherprogrammierbaren Steuerung 5 keine Schwächung im Bereich der Schnittstelle zu dem Prozess erfährt.

In Fig. 3 ist ein Blockschaltbild einer erfindungsgemäßen, fehlersicheren Peripheriebaugruppe 4 in Form einer Analogeingabeeinheit zu sehen, welche den prinzipiellen Aufbau wie auch die grundsätzliche Wirkungsweise einer erfindungsgemäßen Baugruppe 4 deutlich macht.

Der mit der Anlage verbundene Analogeingang 7 ist über einen Umschalter 8 mit dem Input 9 eines ersten Übertragungskanais 10 verbunden, dem letztendlich die Aufgabe obliegt, das Analogsignal 11 in ein Digitalsignal 12 zu transformieren, welches eine Folge mehrerer Zahlendarstellungen der in kurzen Zeitabständen abgetasteten Amplitude des Analogsignals 11 darstellt. Dieses Digitalsignal 12 wird von einer ersten Datenverarbeitungs-Baugruppe 13 in Form eines Mikrocontrollers eingelesen, und ggf. aufbereitet, bspw. durch Addition eines Offsetwertes, Multiplikation mit einem Skalierungsfaktor, oder auch durch Zusammenstellung eines die Amplitudeninformation enthaltenden und diese ggf. als solche kennzeichnenden Telegramms 14, welches sodann von einem Kommunikationsbaustein 15 über die Verbindung 16 und den fehlersicheren Kommunikationsbus 3 zu der Zentraleinheit 2 der speicherprogrammierbaren Steuerung 1, bzw. zu der Hauptzentraleinheit ZE 1 der hochverfügbaren Steuerung 5 übertragen wird.

Da der Übertragungskanal 10 aufgrund der notwendigen Signalumsetzung und der dafür benötigten, aktiven Bauteile eine nicht verschwindende Ausfallwahrscheinlichkeit aufweist, sieht die Erfindung einen weitgehend identischen, zweiten Überträgungskanal 17 vor, dessen analoger Eingangsanschluss 18 ebenfalls über einen Umschalter 19 an den Analogeingang 7 des erfindungsgemäßen Peripheriebausteins 4 anschließbar ist. Das von dem zweiten Übertragungskanal 17 in eine binäre Impulsfolge 20 gewandelte Analogsignal 11 wird einer an dem Ausgang 20 des zweiten Übertragungskanals 17 angeschlossenen, zweiten Datenverarbeitungs-Baugruppe 21 zugeleitet, welche die notwendigen Aufbereitungsschritte durchführt, um normierte Digitalwerte zu erhalten, welche bei gleichzeitigem Betrieb der beiden Übertragungskanäle 10, 17 im Idealfall identisch mit den von der ersten Datenverarbeitungs-Baugruppe 13 erzeugten Werten sein sollten.

Die solchermaßen in der zweiten Datenverarbeitungs-Baugruppe 21 erhaltenen, normierten Werte werden an einen beschreib- und lesbaren Speicherbaustein 22 übertragen 23 und können von dort über einen weiteren Anschluss 24 dieses Speicherbausteins 22 von der ersten Datenverarbeitungs-Baugruppe 13 bei Bedarf gelesen 25 werden. Somit kann in der ersten Datenverarbeitungs-Baugruppe 13 ein Vergleich der beiden Ergebnisse der beiden Übertragungskanäle 10, 17 vorgenommen werden, und sobald hierbei größere Abweichungen auftreten, liegt zweifellos bei mindestens einer Kanalübertragungsbaugruppe 10, 17 ein Fehler vor.

Die Steuerung 33 des ersten Übertragungskanals 10 ist wie auch die Betätigung 35 des ersten Umschalters 8 der ersten Datenverarbeitungs-Baugruppe 13 zugewiesen, während die entsprechenden Funktionen 34, 36 für den zweiten Übertragungskanal 17 und den zweiten Umschalter 19 von der zweiten Datenverarbeitungs-Baugruppe 21 übernommen werden.

Ferner kann auch an der zweiten Datenverarbeitungs-Baugruppe 21 ein eigener Kommunikationsbaustein 26 angeschlossen 27 sein, um über den dortigen Ausgang 28 über den daran angeschlossenen Kommunikationsbus 3 mit der Hilfs-Zentraleinheit ZE 2 kommunizieren zu können.

Bei Auftreten einer Fehlfunktion, welche die Datenverarbeitungs-Baugruppe 13 feststellt, kann ein entsprechendes Statusregister gesetzt werden, so dass bei einer Anfrage der Zentraleinheit ZE, ZE 1 dieser Fehlerzustand weitergemeldet wird, oder die Datenverarbeitungs-Baugruppe 13 kann von sich aus eine entsprechende Fehlermeldung an die betreffende Zentraleinheit ZE, ZE 1 absenden. Darüber hinaus kann die Information über den Fehlerstatus auch in den beschreib- und lesbaren Speicher 22 eingetragen werden, von wo sie über deren zweiten Anschluss 29 von der zweiten Datenverarbeitungs-Baugruppe 21 eingelesen und über deren Kommunikationsbaustein 26 auch an die Hilfs-Zentraleinheit ZE 2 weitergemeldet werden kann.

Diese erste Betriebsart erlaubt zwar eine Feststellung, ob zumindest eine der beiden Kanalübertragungsbaugruppen 10, 17 defekt ist, jedoch kann bei einer festgestellten Abweichung nicht ohne weiteres eine Aussage darüber getroffen werden, bei welcher der beiden Kanalübertragungsbaugruppen 10, 17 der Fehler zu suchen ist. Deshalb ist eine zusätzliche Testmöglichkeit vorgesehen, wobei von einem Testkanal 30, der von der ersten Datenverarbeitungs-Baugruppe 13 steuerbar 31 ist, ein vorgebbares Analogsignal 32 erzeugt wird, welches durch die Umschalter 8, 19 wahlweise anstelle des Analogeingangsignais 7 der erfindungsgemäßen Peripheriebaugruppe 4 an den Eingang 9, 18 einer Kanalübertragungsbaugruppe 10, 17 schaltbar ist. Durch Rücklesen des Ausgangssignals 12, 20 des betreffenden Kanals 10, 17 und durch Vergleich desselben mit dem Vorgabewert 31 für das von dem Testkanal 30 ausgegebene Signal 32 kann festgestellt werden, ob die betreffende Kanalübertragungsbaugruppe 10, 17 einwandfrei funktioniert.

Bevorzugt wird jeweils nur eine Kanalübertragungsbaugruppe 10, 17 gleichzeitig getestet, während die jeweils andere mit ihrem Umschalter 8, 19 an das analoge Eingangssignal 7 angekoppelt ist und somit für einen lückenlosen Datenfluss Sorge zu tragen vermag. Sofern ein zweiter Kommunikationsbaustein 26 vorgesehen ist, so kann der von dem jeweils den ordnungsgemäßen Betrieb sicherstellenden Übertragungskanal 10, 17 in digitalen Signalen zur Verfügung gestellte Wert 12, 20 über den gemeinsamen Speicher 22 zwischen den beiden Datenverarbeitungs-Baugruppen 13, 21 ausgetauscht und somit über beide Ausgänge 16, 28 auf die jeweils angeschlossenen Kommunikationsbusse 3 und von dort auf beide Zentraleinheiten ZE 1, ZE 2 übertragen werden.

Nach einem kurzen Zeitintervall wird sodann die Funktion der beiden Übertragungskanäle 10, 17 vertauscht, so dass nun der andere Übertragungsweg 10, 17 getestet werden kann. Vorzugsweise werden zwischen diesen Phasen vorübergehend beide Übertragungskanäle 10, 17 parallel an dem Eingangssignal 7 betrieben, so dass kein einziger Messwert verloren geht. Dies wird dadurch erreicht, dass stets einer der beiden Umschalter 8, 19 mit dem Analogeingang 7 verbunden ist. Bei einem Umschalten wird demnach immer zunächst eine Schalterstellung herbeigeführt, wo beide Umschalter 8, 19 mit dem Analogeingang 7 verbunden sind, bis der jeweils andere von diesem Signal gelöst und an das Testsignal 32 angelegt wird.

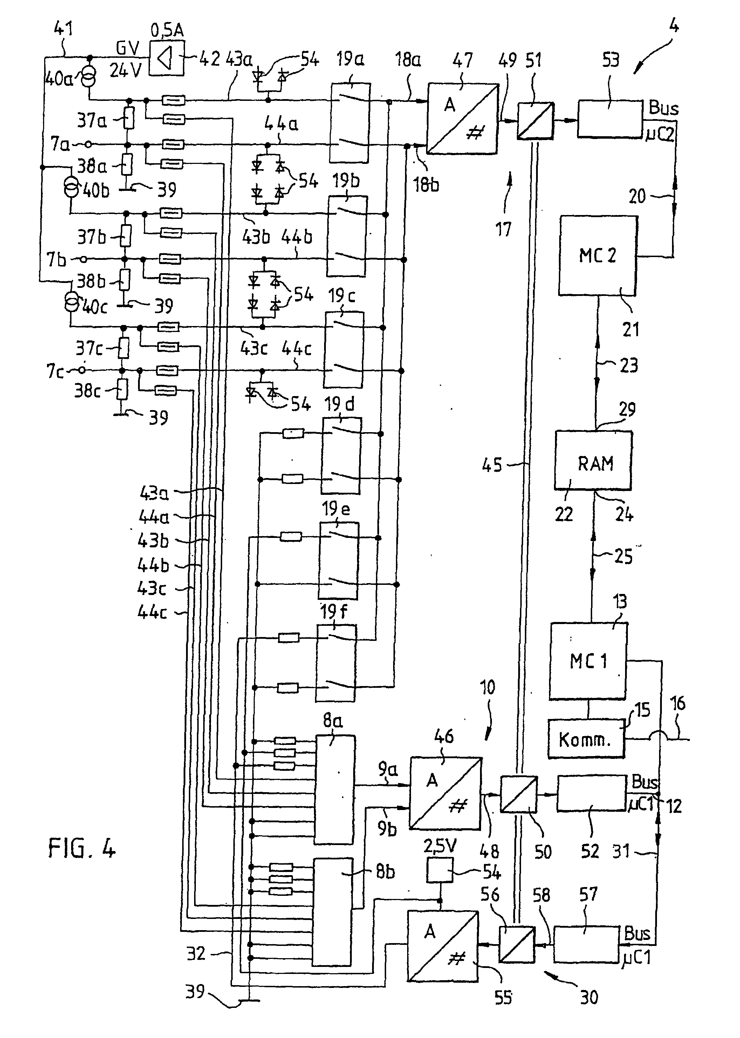

Eine hardwaremäßig aufgebaute Schaltung zur Realisierung der soeben beschriebenen Funktionen ist in Fig. 4 wiedergegeben.

Man erkennt aus Fig. 4, dass der erfindungsgemäße Peripheriebaustein 4 insgesamt drei Analogeingänge 7a - 7c aufweist, von denen jeder an jeden der beiden Übertragungskanäle 10, 17 schaltbar ist. Jede Analogeingangsstufe 7a - 7c ist mit einem Spannungsteiler aus zwei Widerständen 37a - 37c und 38a - 38c aufgebaut. Diese Spannungsteiler 37, 38 sind einseitig mit einem Masseanschluss 39 verbunden, während das jeweils andere Endpotential sowie der Mittelabgriff als Spannungs- U und Stromeingänge I, 7a - 7c ausgebildet sind, deren Nennspannungs- bspw. Strompegel über den betreffenden Spannungsteiler 37, 38 in für nachgeordnete Bausteine kompatible Spannungspegel umgesetzt werden. Von einer Versorgungsgleichspannung 41 von bspw. 24 Volt, die von einem Verstärker 42 hinreichend niederohmig zur Verfügung gestellt wird, werden bspw. angeschlossene Sensor-Stromquellen 40a - 40c von jeweils bspw. 20 mA gespeist, die durch das sensierte Signal moduliert werden. Als relevante Eingangsspannung wird sodann je nachdem die Spannung an dem Spannungsteiler-Mittelabgriffs 7a - 7c und/oder an dem betreffenden Spannungseingang U betrachtet und ggf. über jeweils zwei Leitungen 43a - 43c bzw. 44a - 44c an die Schalter 8, 19 gelegt, von wo sie paarweise an die Eingänge 9a, 9b bzw. 18a, 18b eines oder beider Übertragungskanäle 10, 17 geschalten werden können.

Da die Analogeingänge 7a - 7c durch eine weiter unten zu erläuternde Potentialtrennung 45 nicht mit der allgemeinen Masse verbunden sind, kann die analoge Masse 39 sich in beliebiger Relation zu den Eingangsspannungen 7a - 7c einstellen.

Die Spannungsdifferenz über den Widerständen 37 wird demnach von dem betreffenden Übertragungskanal 10, 17 als eine positive Spannung aufgefasst und von einem Analog-Frequenz-Wandler 46, 47 in eine Impulsfolge 48, 49 mittlerer Frequenz transformiert. Diese Impulsfolge 48, 49 kann von je einem Optokoppler 50, 51 potentialfrei zu einem nachgeschalteten Zählerbaustein 52, 53 übertragen werden, der jeweils die innerhalb eines vorgegebenen Zeitintervalls eintreffenden Impulse zählt und damit ein Maß für die Frequenz 48, 49 liefert. Dieser Zählerstand wird von der jeweils angekoppelten Datenverarbeitungs-Baugruppe 13, 21 jeweils nach Ablauf des vorgegebenen Zeitintervalls abgefragt, sodann wird der Zähler auf null zurückgesetzt und wieder frei gegeben. Der frequenzproportionale Zählerstand 12, 20 stellt somit ein binäres Analogon zu dem aktuellen Spannungswert an dem jeweils durchgeschaltenen Analogeingang 7a - 7c dar und kann von der betreffenden Datenverarbeitungs-Baugruppe 13, 21 ggf. normiert werden, um einen für eine Weiterverarbeitung zugänglichen Digitalwert zu erhalten.

Indem der von dem Übertragungskanal 17 gelieferte Digitalwert 20 von der Datenverarbeitungs-Baugruppe 21 über einen beschreib- und lesbaren Speicher 22 der ersten Datenverarbeitungs-Baugruppe 13 zur Verfügung gestellt wird, können mit dieser Anordnung gleichzeitig zwei unterschiedliche Eingangssignale 7a, 7b in Digitalwerte umgewandelt und über die Kommunikationsbaugruppe 15 an eine Zentraleinheit ZE, ZE 1 weitergeleitet 16 werden. Andererseits ist es auch möglich, dasselbe Eingangssignal 7a - 7c an beide Übertragungskanäle 10, 17 parallel anzuschließen 8, 19, und die solchenfalls erhaltenen Digitalwerte 12, 20 von der Datenverarbeitungs-Baugruppe 13 bspw. durch Subtraktion miteinander vergleichen zu lassen, um einen Anhaltspunkt dafür zu erhalten, ob bei einem der beiden Übertragungskanäle 10, 17 ein Fehler aufgetreten ist.

Bei einer von Null abweichenden Eingangsspannung 7a - 7c verändert sich das Eingangssignal 9, 18 des betreffenden Übertragungskanals 10, 17, so dass sich die Frequenz 48, 49 und demnach das Zählerausgangssignal 12, 20 entsprechend verändern.

Die den Eingängen 7a - 7c nachgeschalteten Signalleitungen 43, 44 weisen Überspannungsschutzdioden 54 auf, um eingestreute Störspitzen von den Eingängen 9, 18 der Übertragungskanäle 10, 17 fernzuhalten. Die Schaltkreise 8a und 8b besitzen integrierte Schutzdioden.

In der Zeichnung sind zwei unterschiedliche Arten von Schaltern wiedergegeben: Bei den Schaltern 8a, 8b handelt es sich um jeweils 1-aus-n-Multiplexer für jeden der beiden Eingangsanschlüsse 9a, 9b des angeschlossenen Übertragungskanals 10, während die Schaltbausteine 19a - 19f als 2xEIN-Schalter aufgebaut sind. Die jeweiligen Ansteuersignale für diese Schaltbausteine 8a, 8b bzw. 19a - 19f werden von den Datenverarbeitungs-Baugruppen 13, 21 generiert und sind zusätzlich potentialmäßig aufgetrennt, so dass auch auf diesem Weg keine Störspannungen durch die Barriere 45 in den Datenverarbeitungsbereich 13, 21 gelangen können. Um einen ordnungsgemäßen Betrieb sicherzustellen, müssen von den Schaltern 8a, 8b jeweils die einander entsprechenden Eingänge zu den Ausgangssignalen 9a, 9b durchgeschalten werden. Andererseits muss bei der Schaltungsanordnung mit den Schaltern 19a - 19f sichergestellt werden, dass stets nur ein einziger Schalterbaustein 19a - 19f durchgeschalten ist.

Unter Beachtung dieser Schaltregeln können zu jedem der beiden Übertragungskanäle 10, 17 neben den drei Eingangssignalanschlüssen 7a - 7c auch drei Testsignale durchgeschalten werden. Am deutlichsten ist dies bei dem Übertragungskanal 17 zu erkennen, wo für jeden Testmodus ein eigener Schalter 19d - 19f vorgesehen ist. Wird hiervon der Schalter 19d geschlossen, so liegt an beiden Eingängen 18a, 18b des Analog-Frequenz-Wandlers 47 dieselbe Spannung an, nämlich das analoge Massepotential 39. Demzufolge muss bei diesem Testmodus stets ein Zählerwert von null ausgelesen 20 werden. Ist dies nicht der Fall, so ist der getestete Kanal defekt.

Über einen weiteren Schalter 19e kann einerseits das Massepotential 39 und andererseits eine fest vorgegebene Referenzspannung 54 von bspw. 2,5 V gegenüber dem Massepotential 39 zu den Eingängen 18a, 18b des Analog-Frequenz-Wandlers 47 durchgeschalten werden, und sofern nicht ein dieser Spannungsamplitude 54 entsprechender Wert aus dem Zähler 53 ausgelesen 20 wird, so liegt ebenfalls ein Fehler vor.

Schließlich kann mit dem Schalter 19f eine kontinuierliche Überprüfung des Übertragungskanals 47 für beliebige Zwischenwerte vorgenommen werden. Hierbei findet ein Testkanal 30 Verwendung, der von der Datenverarbeitungs-Baugruppe 13 angesteuert 31 wird. Kern dieses Testkanals bildet ein Frequenz-Analogspannungs-Wandler 55, der zwecks Potentialtrennung 45 über einen Optokoppler 56 mit einer Bitfolge beschickt wird, die von einem Schieberegister 57 ausgegeben wird. Das Schieberegister 57 wird über die Steuerleitung 31 von der Datenverarbeitungs-Baugruppe 13 geladen und sodann mit einer vorgegebenen Frequenz getaktet, derart, dass sämtliche Bits dieses Schieberegisters 57 in einem vorgegebenen Zeitintervall an dem Ausgang 58 abgegeben werden. Je nach Anzahl der Flanken der von dem Schieberegister 57 abgegebenen Impulsfolge 58 erzeugt der Frequenz-Spannungs-Wandler 55 unterschiedliche Analogspannungen 32, welche sodann - bezogen auf das analoge Massenpotential 39 - über den Schalter 19f an die Eingänge 18 des zu testenden Übertragungssignals 17 gelegt werden. Dort wird diese Spannung zurückgewandelt und kann von der zweiten Datenverarbeitungs-Baugruppe 21 eingelesen 20 werden. Diese meldet das registrierte Ergebnis über den Speicher 22 an die erste Datenverarbeitungs-Baugruppe 13, welche den solchermaßen am Ende der Schleife erhaltenen Wert mit dem ursprünglich an das Schieberegister 57 ausgegebenen Wert vergleicht und hieraus größere Abweichungen erkennen und ggf. einen Fehler feststellen kann.

Mit demselben Testsignal 39, 54, 32 kann auch der erste Übertragungskanal 10 getestet werden, wobei ausschließlich die Steuerung der Multiplexer 8a, 8b entsprechend vorgenommen werden muss.

Bei einer weiter modifizierten Ausführungsform kann auch die Eingangsbeschaltung etwa bis zu der Barriere 45 pro Peripheriebaustein 4 insgesamt doppelt ausgeführt sein, um die Sicherheit weiter zu verbessern. Solchenfalls kann bei der Zuordnung der Eingänge 7a, 7b und 7c zu den Bausteinen 8, 19 und/oder die Zuordnung der Spannungs-Frequenz-Wandler 46, 47 zu den Datenverarbeitungs-Baugruppen 13, 21 bei den beiden Eingangsbeschaltungen über Kreuz erfolgen, so dass die beiden Eingangsbeschaltungen quasi antiparallel von den Datenverarbeitungs-Baugruppen 13, 21 angesteuert werden.

## Patentansprüche

1. Peripheriebaustein (4) mit hoher Fehlersicherheit für speicherprogrammierbare Steuerungen (1,5), insbesondere Analogeingabe-Schaltung, mit wenigstens zwei weitgehend identisch aufgebauten Kanälen (10/17) zur parallelen Signalein- und/oder -ausgabe, **darduch gekennzeichnet**, **dass** der Peripheriebaustein Mitteln enhält wodurch die Kanäle (10,17) wahlweise an eine Peripherieschnittstelle (7) anschaltbar sind, und wodurch einen Datenverarbeitungs-Block (13) zum Testen des jeweils anderen Kanals (17,10) ohne Unterbrechung des Datenflusses über den ausgewählten Kanal (10,17) Vorhanden ist.

2. Peripheriebaustein nach Anspruch 1, **gekennzeichnet durch** einen zweiten Datenverarbeitungs-Block (21) zum Aufbereiten der zu übertragenden Daten (11,20) während einer Testphase.

3. Peripheriebaustein nach Anspruch 2, **dadurch gekennzeichnet, dass** jede der beiden Datenverarbeitungs-Blöcke (13,21) je einem Kanal (10,17) zugeordnet ist und derart ausgebildet ist, dass er sowohl die Signalaufbereitung wie auch den Test dieses Kanals (17,10) übernehmen kann.

4. Peripheriebaustein nach Anspruch 3, **dadurch gekennzeichnet, dass** die beiden Datenverarbeitungs-Blöcke (13,21) miteinander gekoppelt sind (22,23,25).

5. Peripheriebaustein nach Anspruch 4, **dadurch gekennzeichnet, dass** die beiden Datenverarbeitungs-Blöcke (13,21) über bausteininterne Verbindungen (22,23,25) miteinander gekoppelt sind.

6. Peripheriebaustein nach Anspruch 5, **dadurch gekennzeichnet dass** die beiden Datenverarbeitungs-Blöcke (13,21) über einen Speicher (22) gekoppelt sind, auf den sie beide Zugriff haben.

7. Peripheriebaustein nach Anspruch 6, **dadurch gekennzeichnet, dass** die beiden Datenverarbeitungs-Blöcke (13,21) an unterschiedlichen Ein-/Ausgängen (24,29) des Speichers (22) angeschlossen (23,25) sind.

8. Peripheriebaustein nach einem der vorhergehenden Ansprüche, **gekennzeichnet durch** einen zusätzlichen Ausgabe- bzw. Einlese-Testkanal (30), wobei einer der Kanäle (10,17) an die Peripherieschnittstelle (7) und der jeweils andere (17,10) an den Testkanal (30,8,9) anschaltbar ist, und **durch** den Datenverarbeitungs-Block (13) zum Überprüfen einer so gebildeten Schleife aus einem der Kanäle (17/10) und dem Testkanal (30) ohne Unterbrechung des Datenflusses über den jeweils anderen Kanal (10,17).

9. Peripheriebaustein nach Anspruch 8, wobei in der so gebildeten Schleife aus einem der Kanäle (17,10) und dem Testkanal (30) die ordnungsgemäße Verarbeitung eines Testsignals (32) überprüfbar ist.

10. Peripheriebaustein nach Anspruch 9, **dadurch gekennzeichnet, dass** die Ansteuerung (31) des Testkanals (30) einem der beiden Datenverarbeitungs-Blocks (13) fest zugewiesen ist.

11. Peripheriebaustein nach einem der vorhergehenden Ansprüche, **dadurch gekennzeichnet, dass** die beiden Kanäle (10,17) auf der selben Platine angeordnet sind.

12. Peripheriebaustein nach Anspruch 11, **dadurch gekennzeichnet, dass** wenigstens ein Datenverarbeitungs-Block (13,21) zusammen mit den beiden Kanälen (10,17) auf der selben Platine angeordnet ist.

13. Peripheriebaustein nach einem der vorhergehenden Ansprüche, **dadurch gekennzeichnet, dass** in beiden Kanälen (10,17), vorzugsweise auch in einem Testkanal (30), eine Potentialtrennung (45) vorgesehen ist.

14. Peripheriebaustein nach einem der vorhergehenden Ansprüche für eine analoge Ein- und/oder Ausgabe, **dadurch gekennzeichnet, dass** eine Signalumsetzung (46,47) zwischen analogen Strom- oder Spannungspegeln (9,18) einerseits und einem alternierenden Signal (48,49) mit einer zu dem Analogsignal (9,18) proportionalen Frequenz andererseits erfolgt.

15. Peripheriebaustein nach Anspruch 13 in Verbindung mit Anspruch 14, **dadurch gekennzeichnet, dass** die Potentialtrennung (45) bei dem alternierenden Signal (48,49) erfolgt.

16. Peripheriebaustein nach Anspruch 14 oder 15, **dadurch gekennzeichnet, dass** das alternierende Signal (48,49) einem Zählerbaustein (52,53) zugeführt ist, um durch Zählen der Impulse (48,49) innerhalb eines festen Zeitintervalls einen zu der Frequenz des alternierenden Signals (48,49) proportionalen Digitalwert (12,20) zu erzeugen.

17. Peripheriebaustein nach einem der Ansprüche 14 oder *15,* **dadurch gekennzeichnet, dass** das alternierende Signal (58) einem Baustein (57) mit einem seriellen Ausgang entnommen wird, welches in einem vorgegebenen Zeitintervall eine vorgegebene Anzahl von Ausgangsbits abgibt.

18. Verfahren zum Betrieb eines Peripheriebausteins (4) mit hoher Fehlersicherheit für speicherprogrammierbare Steuerungen (1,5), insbesondere Analogeingabe-Schaltung, mit wenigstens zwei weitgehend identisch aufgebauten Kanälen (10,17) zur parallelen Signalein- und/oder -ausgabe, **dadurch gekennzeichnet, dass** Schritte vorhanden sind wodurch die Kanäle (10,17) wahlweise an eine Peripherieschnittstelle (7) anschaltbar sind, und wodurch einen Datenverarbeitungs-Block (13) zum Testen des jeweils anderen Kanals (17,10) ohne Unterbrechung des Datenflusses über den ausgewählten Kanal (10,17) erfolgt, wobei einfügen die Ausgangssignale der beiden Kanäle (10,17) voneinander subtrahiert werden, und wobei das Subtraktionsergebnis mit wenigstens einem vorgegebenen Grenzwert verglichen wird, um bei einer größeren Abweichung einen Fehler zu erkennen.

19. Verfahren nach Anspruch 18, **gekennzeichnet durch** einen Testmodus, wobei ein Kanal (10,17) zur Signalübertragung verwendet und der andere (17,10) währenddessen einem Test unterzogen wird, indem ein Testsignal (31) ausgegeben und wieder eingelesen wird, und wobei der ausgegebene und der eingelesene (12,20) Signalwert voneinander subtrahiert werden, und wobei schließlich das Subtraktionsergebnis mit wenigstens einem vorgegebenen Grenzwert verglichen wird, um bei einer größeren Abweichung einen Fehler zu erkennen.

20. Verfahren nach Anspruch 19, **dadurch gekennzeichnet, dass** der Testmodus in kurzen Zeitabständen wiederholt wird, wobei jeweils zunächst ein Kanal (10,17) und sodann der andere (17,10) getestet (32) wird und der jeweils andere währenddem die Signalübertragung (7) übernimmt.

21. Verfahren nach einem der Ansprüche 18 bis 20, **dadurch gekennzeichnet, dass** ein Datenverarbeitungs-Block (13) die Auswertung der Testergebnisse übernimmt.

22. Verfahren nach Anspruch 21, **dadurch gekennzeichnet, dass** ein Datenverarbeitungs-Block (13,21), vorzugsweise der die Auswertung übernehmende (13), über eine Datenschnittstelle (15) mit der Zentraleinheit (2E,ZB1,2E2) der speicherprogrammierbaren Steuerung (1,5) kommuniziert.

23. Verfahren nach Anspruch 22, **dadurch gekennzeichnet, dass** von dem mit der Zentraleinheit (ZE,ZE1,ZE2) der speicherprogrammierbaren Steuerung (1,5) kommunizierende (15) Datenverarbeitungs-Block (13) ein Informationssignal über den aktuellen Test- bzw. Fehlerstatus bereitgehalten wird.

24. Verfahren nach einem der Ansprüche 18 bis 23, **dadurch gekennzeichnet , dass** jeder Datenverarbeitungs-Baustein (13,21) je eine eigene Datenschnittstelle (15,26) zu je einer Datenverbindung aufweist, so dass die Verwendung zweier voneinander völlig unabhängiger Datenleitungen (16,3;28,3) möglich ist.

## Claims

1. An interface module (4) having a high level of error immunity for programmable logic controllers (1, 5), particularly an analog-input circuit, having at least two channels (10, 17) of largely identical design for parallel signal input and/or output, **characterized in that** the interface module includes means through which the channels (10,17) can be selectively connected to a peripheral interface (7) and through which a data processing block (13) for testing the respective other channel (17,10) without interrupting the flow of data via the selected channel (10,17) is present.

2. The interface module in accordance with Claim 1, **characterized by** a second data processing block (21) for conditioning the data (11, 20) to be transferred during a test phase.

3. The interface module in accordance with Claim 2, **characterized in that** each of the two data processing blocks (13, 21) is associated with one respective channel (10, 17) and is designed such that it can undertake both the signal conditioning and the testing of this channel (17, 10).

4. The interface module in accordance with Claim 3, **characterized in that** the two data processing blocks (13, 21) are coupled to one another (22, 23, 25).

5. The interface module in accordance with Claim 4, **characterized in that** the two data processing blocks (13, 21) are coupled to one another via in-module connections (22, 23, 25).

6. The interface module in accordance with Claim 5, **characterized in that** the two data processing blocks (13, 21) are coupled via a memory (22) to which they both have access.

7. The interface module in accordance with Claim 6, **characterized in that** the two data processing blocks (13, 21) are connected (23, 25) to different inputs/outputs (24, 29) for the memory (.22).

8. The interface module in accordance with one of the preceding claims, **characterized by** an additional output and read-in test channel (30), one of the channels (10, 17) being able to be connected to the peripheral interface (7) and the respective other one (17, 10) being able to be connected to the test channel (30, 8, 9), and by the data processing block (13) for checking a loop formed in this way comprising one of the channels (17, 10) and the test channel (30) without interrupting the flow of data via the respective other channel (10, 17).

9. The interface module in accordance with Claim 8, where the loop formed in this way comprising one of the channels (17, 10) and the test channel (30) can be used to check the correct processing of a test signal (32).

10. The interface module in accordance with Claim 9, **characterized in that** the actuation (31) for the test channel (30) is firmly associated with one of the two data processing blocks (13).

11. The interface module in accordance with one of the preceding claims, **characterized in that** the two channels (10, 17) are arranged on the same circuit board.

12. The interface module in accordance with Claim 11, **characterized in that** at least one data processing block (13, 21) is arranged together with the two channels (10, 17) on the same circuit board.

13. The interface module in accordance with one of the preceding claims, **characterized in that** both channels (10, 17), and preferably also a test channel (30), are provided with a potential isolator (45).

14. The interface module in accordance with one of the preceding claims for analog input and/or output, **characterized in that** signal conversion (46, 47) takes place between analog current or voltage levels (9, 18), on the one hand, and an alternating signal (48, 49) with a frequency which is proportional to the analog signal (9, 18), on the other hand.

15. The interface module in accordance with Claim 13 in conjunction with Claim 14, **characterized in that** the potential isolator (45) is used for the alternating signal (48, 49).

16. The interface module in accordance with Claim 14 or 15, **characterized in that** the alternating signal (48, 49} is supplied to a counter module (52, 53) in order to produce a digital value (12, 20) which is proportional to the frequency of the alternating signal (48, 49) by counting the pulses (48, 49) within a fixed interval of time.

17. The interface module in accordance with one of Claims 14 or 15, **characterized in that** the alternating signal (58) is taken from a module (57) having a serial output, which outputs a prescribed number of output bits in a prescribed interval of time.

18. A method for operating an interface module (4) having a high level of error immunity for programmable logic controllers (1, 5), particularly an analog-input circuit, having at least two channels (10, 17) of largely identical design for parallel signal input and/or output, **characterized in that** steps are present through which the channels (10,17) can be selectively connected to a peripheral interface (7) and through which a data processing block (13) for testing the respective other channel (17,10) without interrupting the flow of data via the selected channel (10,17) is run, whereby the output signals of the two channels (10, 17) are subtracted from one another, with the result of the subtraction being compared with at least one prescribed limit value in order to identify an error if there is a relatively large discrepancy.

19. The method in accordance with Claim 18, **characterized by** a test mode, where one channel (10, 17) is used for signal transmission and the other (17, 10) is meanwhile subjected to a test by outputting a test signal (31) and reading it in again, and where the signal value which is output and the signal value which is read in (12, 20) are subtracted from one another, and where the result of the subtraction is finally compared with at least one prescribed limit value in order to identify an error if there is a relatively large discrepancy.

20. The method in accordance with Claim 19, **characterized in that** the test mode is repeated at short intervals of time, with first one channel (10, 17) and then the other (17, 10) being respectively tested (32), and the respective other one undertaking the signal transmission (7) in the meantime.

21. The method in accordance with one of Claims 18 to 20, **characterized in that** a data processing block (13) undertakes the evaluation of the test results.

22. The method in accordance with Claim 21, **characterized in that** a data processing block (13, 21), preferably the one (13) undertaking the evaluation, communicates with the central processor unit (ZE, ZE1, ZE2) for the programmable logic controller (1, 5) via a data interface (15).

23. The method in accordance with Claim 22, **characterized in that** the data processing block (13) communicating (15) with the central processor unit (ZE, ZE1, ZE2) for the programmable logic controller (1, 5) provides an information signal regarding the current test or error status.

24. The method in accordance with one of Claims 18 to 23, **characterized in that** each data processing module (13, 21) has a respective dedicated data interface (15, 26) to a respective data link, so that it is possible to use two data lines (16, 3; 28, 3) which are entirely independent of one another.

## Revendications

1. Composant périphérique (4) ayant un degré de protection élevé contre les erreurs et destiné à des commandes à mémoire programmable (1, 5), notamment circuit d'entrée analogique, comprenant au moins deux canaux (10, 17) de structure largement identique pour l'entrée et/ou la sortie parallèle de signaux, **caractérisé par le fait que** le composant périphérique comporte des moyens par lesquels les canaux (10, 17) peuvent être branchés sélectivement sur une interface périphérique (7) et par lesquels il existe un bloc de traitement de données (13) pour tester l'autre canal respectif (17, 10) sans interrompre le flux de données passant par le canal sélectionné (10,17).

2. Composant périphérique selon la revendication 1, **caractérisé par** un deuxième bloc de traitement de données (21) pour préparer les données à transmettre (11, 20) pendant une phase de test.

3. Composant périphérique selon la revendication 2, **caractérisé par le fait que** chacun des deux blocs de traitement de données (13, 21) est associé à un canal (10, 17) et est conçu de telle sorte qu'il peut prendre en charge aussi bien la préparation de signal que le test de ce canal (17, 10).

4. Composant périphérique selon la revendication 3, **caractérisé par le fait que** les deux blocs de traitement de données (13, 21) sont couplés entre eux (22, 23, 25).

5. Composant périphérique selon la revendication 4, **caractérisé par le fait que** les deux blocs de traitement de données (13, 21) sont couplés entre eux par l'intermédiaire de liaisons (22, 23, 25) internes au composant.

6. Composant périphérique selon la revendication 5, **caractérisé par le fait que** les deux blocs de traitement de données (13, 21) sont couplés par l'intermédiaire d'une mémoire (22) à laquelle ils ont tous deux accès.

7. Composant périphérique selon la revendication 6, **caractérisé par le fait que** les deux blocs de traitement de données (13, 21) sont raccordés (23, 25) à différentes entrées / sorties (24, 29) de la mémoire (22).

8. Composant périphérique selon l'une des revendications précédentes, **caractérisé par** un canal de test de sortie ou d'enregistrement (30) supplémentaire, l'un des canaux (10, 17) pouvant être branché sur l'interface périphérique (7) et l'autre canal respectif (17, 10) pouvant être branché sur le canal de test (30, 8, 9), et par le bloc de traitement de données (13) pour la vérification d'une boucle ainsi formée de l'un des canaux (17, 10) et du canal de test (30) sans interruption du flux de données passant par l'autre canal respectif (10,17).

9. Composant périphérique selon la revendication 8, dans lequel le traitement normal d'un signal de test (32) peut être vérifié dans la boucle ainsi formée de l'un des canaux (17, 10) et du canal de test (30).

10. Composant périphérique selon la revendication 9, **caractérisé par le fait que** la commande (31) du canal de test (30) est attribuée en permanence à l'un des deux blocs de traitement de données (13).

11. Composant périphérique selon l'une des revendications précédentes, **caractérisé par le fait que** les deux canaux (10, 17) sont placés sur la même carte.

12. Composant périphérique selon la revendication 11, **caractérisé par le fait qu'**au moins un bloc de traitement de données (13, 21) est placé conjointement aux deux canaux (10, 17) sur la même carte.

13. Composant périphérique selon l'une des revendications précédentes, **caractérisé par le fait qu'**il est prévu une séparation de potentiel (45) dans les deux canaux (10, 17), de préférence aussi dans un canal de test (30).

14. Composant périphérique selon l'une des revendications précédentes pour une entrée et/ou sortie analogique, **caractérisé par le fait qu'**il s'effectue une conversion de signal (46, 47) entre des niveaux analogiques de courant ou de tension (9, 18) d'une part et un signal alternant (48, 49) ayant une fréquence proportionnelle au signal analogique (9, 18) d'autre part.

15. Composant périphérique selon la revendication 13 en relation avec la revendication 14, **caractérisé par le fait que** la séparation de potentiel (45) s'effectue au niveau du signal alternant (48, 49).

16. Composant périphérique selon la revendication 14 ou 15, **caractérisé par le fait que** le signal alternant (48, 49) est envoyé à un composant compteur (52, 53) pour produire une valeur numérique (12, 20) proportionnelle à la fréquence du signal alternant (48, 49) en comptant les impulsions (48, 49) à l'intérieur d'un intervalle de temps fixe.

17. Composant périphérique selon l'une des revendications 14 ou 15, **caractérisé par le fait que** le signal altemant (58) est pris à un composant (57) qui a une sortie sérielle et qui fournit un nombre prédéterminé de bits de sortie pendant un intervalle de temps prédéterminé.

18. Procédé pour faire fonctionner un composant périphérique (4) ayant un degré de protection élevé contre les erreurs et destiné à des commandes à mémoire programmable (1, 5), notamment circuit d'entrée analogique, comprenant au moins deux canaux (10, 17) de structure largement identique pour l'entrée et/ou la sortie parallèle de signaux, **caractérisé par le fait qu'**il est prévu des étapes par lesquelles les canaux (10, 17) peuvent être branchés sélectivement sur une interface périphérique (7) et par lesquels il existe un bloc de traitement de données (13) pour tester l'autre canal respectif (17, 10) sans interrompre le flux de données passant par le canal sélectionné (10, 17), les signaux de sortie des deux canaux (10, 17) étant soustraits l'un de l'autre et le résultat de la soustraction étant comparé à au moins une valeur limite prédéterminée afin de signaler une erreur en présence d'un écart trop grand.

19. Procédé selon la revendication 18, **caractérisé par** un mode de test dans lequel un canal (10, 17) est utilisé pour la transmission de signal et l'autre (17, 10) est soumis pendant ce temps à un test, un signal de test (31) étant sorti et à nouveau enregistré, et dans lequel la valeur de signal sortie et la valeur de signal enregistrée (12, 20) sont soustraites l'une de l'autre et enfin dans lequel le résultat de la soustraction est comparé à au moins une valeur limite prédéterminée afin de signaler une erreur en présence d'un écart trop grand.

20. Procédé selon la revendication 19, **caractérisé par le fait que** le mode de test est répété à de courts intervalles de temps, à chaque fois d'abord un canal (10, 17) et ensuite l'autre (17, 10) étant testé (32) et l'autre canal respectif prenant en charge la transmission de signal (7) pendant ce temps.

21. Procédé selon l'une des revendications 18 à 20, **caractérisé par le fait qu'**un bloc de traitement de données (13) prend en charge l'évaluation des résultats de test.

22. Procédé selon la revendication 21, **caractérisé par le fait qu'**un bloc de traitement de données (13, 21), de préférence celui (13) prenant en charge l'évaluation, communique par l'intermédiaire d'une interface de données (15) avec l'unité centrale (ZE, ZE1, ZE2) de la commande à mémoire programmable (1, 5).

23. Procédé selon la revendication 22, **caractérisé par le fait qu'**un signal d'informations concernant l'état actuel de test ou d'erreur est mis à disposition par le bloc de traitement de données (13) communiquant (15) avec l'unité centrale (ZE, ZE1, ZE2) de la commande à mémoire programmable (1,5).

24. Procédé selon l'une des revendications 18 à 23, **caractérisé par le fait que** chaque composant de traitement de données (13, 21) comporte une interface de données propre (15, 26) pour chaque liaison de données de telle sorte que l'utilisation de deux lignes de données (16, 3 ; 28, 3) complètement indépendantes l'une de l'autre est possible.
